# FASCICULE DE BREVET EUROPEEN

(11) **EP 0 500 418 B1**
(45) Date de publication et mention de la délivrance du brevet: **25.03.1998**
(21) Numéro de dépôt: 92400357.7
(22) Date de dépôt: 11.02.1992
(51) Int. Cl.: G02B 6/42, G02B 6/28

(54) **Coupleur de piquage optique**
Optischer Abzweigkuppler
Optical tap coupler

(30) Priorité: 15.02.1991 FR 9101819
(43) Date de publication de la demande: 26.08.1992
(73) Titulaire: ALCATEL ALSTHOM COMPAGNIE GENERALE D'ELECTRICITE, 75008 Paris (FR)
(72) Inventeur: Tardy, André, F-91520 Egly (FR)
(74) Mandataire: Sciaux, Edmond

(56) Documents cités:
- WO-A-89/06815
- DE-A- 3 429 947
- US-A- 4 950 046
- PATENT ABSTRACTS OF JAPAN vol. 11, no. 109 (P-564)(2556) 7 Avril 1987; & JP-A-61 258 205

## Description

L'invention concerne un coupleur de piquage destiné à assurer une injection et/ou une dérivation d'énergie optique en un point quelconque d'au moins un conducteur optique, sans qu'il soit nécessaire d'altérer ou de morceler ce conducteur, et en particulier un connecteur pour câble optique destiné à constituer un bus de transmission d'informations, le plus souvent bidirectionnel.

Le développement des transmissions par conducteurs optiques, en particulier dans le cadre de réseaux locaux à stations multiples et à configuration évolutive, conduit à rechercher des solutions permettant d'effectuer des raccordements de coupleurs au long d'un conducteur optique sans avoir ni à morceler ni à altérer ce conducteur optique. Le principe d'un tel raccordement est notamment évoqué dans le document DE-A-3429447 qui est relatif à un dispositif permettant d'injecter de l'énergie optique dans un premier conducteur optique au travers d'une extrémité dûment aménagée d'un autre conducteur optique qui est plaquée contre le premier dans une zone où celui-ci est courbé de manière à faciliter l'injection.

Toutefois dans la pratique, le raccordement d'un équipement de station à un conducteur optique implique le plus souvent des opérations relativement délicates à réaliser sur site, en particulier dans le cas de conducteurs optiques exploités dans la cadre de réseaux industriels, et sont susceptibles d'introduire des pertes non négligeables par exemple de l'ordre d'un décibel par raccordement d'équipement.

Une solution connue met en oeuvre des coupleurs, de type té optique passif, réalisés soit en technologie dite à fibre , soit en technologie dite d'optique guidée planaire. Cette solution ajoute une perte d'insertion d'un décibel par coupleur à la perte d'un décibel due à chaque raccordement, ce qui réduit en conséquence la capacité en nombre d'équipements susceptibles d'être communément desservis par un même conducteur optique.

Une autre solution connue consiste à mettre en oeuvre des coupleurs régénérateurs, toutefois là encore le nombre d'équipements susceptibles d'être desservis par un même conducteur est limité en raison de l'allongement des temps de propagation dus aux retards occasionnés par les traitements de régénération au niveau des coupleurs et à l'accumulation de gigue du signal transmis.

L'invention propose donc un coupleur de piquage destiné à assurer une injection et/ou une dérivation d'énergie optique en un point quelconque, dit de piquage, d'au moins un conducteur optique, sans qu'il soit nécessaire d'altérer ou de morceler ce conducteur, et en particulier un connecteur pour câble optique destiné à constituer un bus de transmission d'informations.

Ce coupleur de piquage optique est défini dans la revendication 1. En ce qui concerne des mesures d'un exemple préferé de réalisation référence est faite aux revendications secondaires.

L'invention, ses caractéristiques et ses avantages sont précisés dans la description qui suit, en liaison avec les figures répertoriées ci-dessous.

La figure 1 présente une coupe schématique en vue de face d'un coupleur de piquage selon l'invention.

La figure 2 présente une coupe schématique en vue de dessous du coupleur montré en figure 1.

La figure 3 présente un schéma de définition du dispositif de raccordement optique proprement dit d'un coupleur selon l'invention.

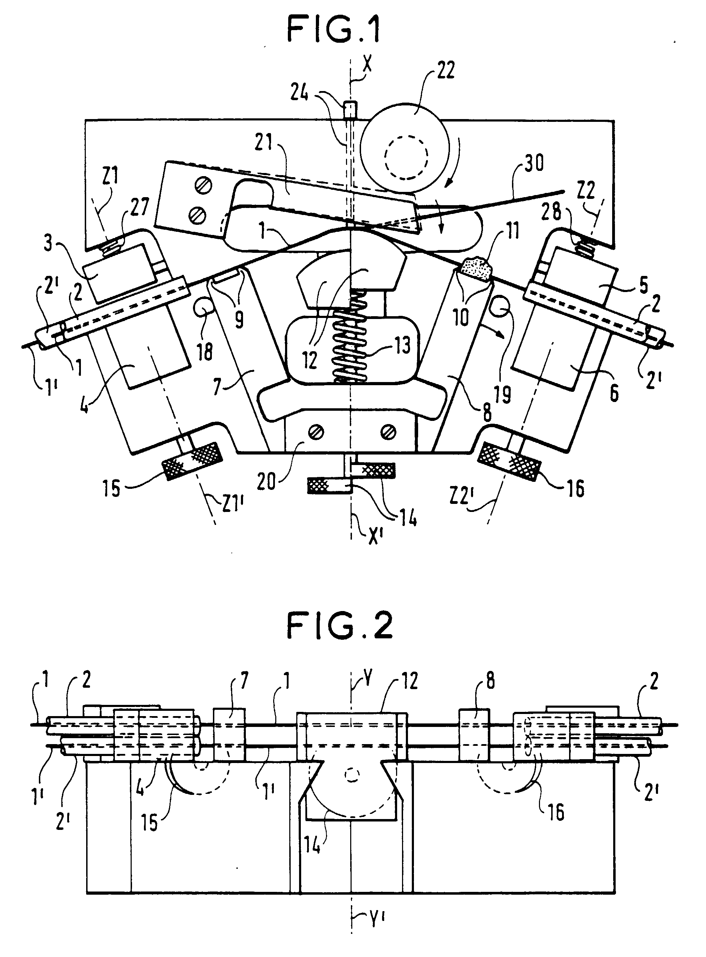

Le coupleur de piquage présenté en figure 1 est destiné à permettre le raccordement d'au moins un équipement émetteur et/ou récepteur optique, non représenté, à au moins un conducteur optique 1 d'un câble, par exemple de type à structure libre, ce conducteur étant classiquement composé d'une fibre optique en verre protégée par un revêtement plastique et logée dans une gaine isolante 2, la fibre elle-même étant du type à échelon d'indice.

Dans un exemple de réalisation, un conducteur optique de câble est constitué d'une fibre ayant un diamètre de coeur de 200 µm, un diamètre sur verre de 280 µm et un diamètre sur revêtement plastique de l'ordre de 500 µm.

Un conducteur optique auxiliaire 30 relie un transducteur électro-optique, non représenté, de l'équipement à raccorder à un conducteur optique de câble dans le coupleur de piquage, ce conducteur optique auxiliaire est lui aussi constitué par une fibre optique recouverte par un revêtement protecteur.

Une diode électroluminescente ou une diode laser assure l'émission des signaux sous forme optique sur le conducteur optique auxiliaire à partir de l'équipement, la réception étant susceptible d'être assurée par une photodiode à semiconducteurs.

Dans l'exemple de réalisation proposé, le coupleur de piquage est prévu pour recevoir deux conducteurs optiques 1 et 1' et permettre un raccordement simultané d'un conducteur optique auxiliaire différent 30, sur chacun d'eux, de manière à permettre une transmission bidirectionnelle à voies séparées.

Le coupleur de piquage est agencé de manière à permettre un passage en traversée des deux conducteurs optiques 1 et 1' de câble dans un boîtier où sont logés ses autres éléments constitutifs, ce boîtier étant préférablement agencé de manière connue, par exemple par association de parties articulées ou dissociables, pour venir se refermer sur ces conducteurs en un emplacement quelconque choisi entre leurs deux extrémités.

A cet effet, le boîtier contient deux dispositifs d'immobilisation, pour gaines de câble, constitués chacun par un jeu de mâchoires 3, 4 et 5, 6 destinées à immobiliser des gaines 2 et 2' de part et d'autre d'une zone centrale où les conducteurs optiques concernés sont localement débarrassés de ces gaines 2 ou 2', qui les recouvrent respectivement, pour permettre un raccordement.

Au moins une des mâchoires de chacun des jeux 3, 4 ou 5, 6 comporte des guides, par exemple des rainures parallèles, destinés à positionner une portion de chaque gaine 2 ou 2' avant immobilisation de ces gaines par rapprochement des mâchoires de chaque jeu.

Dans l'exemple de réalisation proposé, l'une des mâchoires de chaque jeu, ici 4 ou 6, est fixe alors que l'autre, ici 3 ou 5, mobile est rappelée en position d'ouverture par un ressort 27 ou 28 et vient s'appliquer contre la mâchoire fixe correspondante sous l'action d'un organe de serrage 15 ou 16, ici représenté par une vis à tête moletée.

La moitié droite de la figure 1 présente le jeu de mâchoires 5, 6 lorsqu'elles sont rapprochées, alors que la partie gauche montre les mâchoires 3, 4 desserrées avant immobilisation des gaines 2, 2'.

Un dispositif tenseur est associé aux jeux de mâchoires pour assurer la fixation des conducteurs optiques de câble et leur appliquer une certaine tension dans la zone de raccordement où ces conducteurs optiques sont hors gaine.

Ce dispositif est ici doté de deux bras tenseurs élastiques 7 et 8 fixés chacun à une de leurs deux extrémités au niveau d'une base commune 20 et disposés de manière à venir chacun en appui simultané par leur autre extrémité, qui est autrement libre, sur les conducteurs optiques 1 et 1' entre les jeux de mâchoires 3, 4 et 5, 6, au long du trajet de ces conducteurs entre les jeux de mâchoires et de part et d'autre d'une zone centrale pour les deux bras.

L'extrémité libre de chacun des bras tenseurs 7, 8 est disposée dans le boîtier du coupleur de piquage de manière à être au niveau des trajets des conducteurs optiques 1 et 1' entre les jeux de mâchoires, ces deux conducteurs venant se plaquer en parallèle sur chacune de ces extrémités pour y être immobilisés.

Dans la réalisation proposée, chaque extrémité libre comporte deux portées parallèles référencées 9 pour le bras tenseur 7 et 10 pour le bras tenseur 8, ces portées sont disposées transversalement par rapport au trajet des conducteurs optiques de câble contre lesquels elles se positionnent.

Un collage des conducteurs optiques 1 et 1' sur les extrémités libres des bras tenseurs 7 et 8 assure leur immobilisation par rapport à ces bras, un évidemment de positionnement de goutte de colle est prévu entre les deux portées d'extrémité libre de bras tenseur à cet effet, comme on le voit pour la goutte de colle 11 entre les portées 10 du bras tenseur 8 sur la figure 1.

Selon l'invention, les raccordements optiques s'effectuent dans la zone centrale, située entre les deux bras tenseurs et donc entre les jeux de mâchoires, où les conducteurs optiques sont hors gaine, seuls subsistant la fibre optique et son revêtement protecteur pour chaque conducteur optique de câble.

A cet effet une courbure est donnée à chaque conducteur optique 1, 1' dans la zone où ce conducteur est hors gaine et où une extrémité de conducteur optique auxiliaire 30 ou 30' vient s'appliquer quasi-ponctuellement.

Un transfert d'énergie optique est obtenu par couplage de modes guidés aux modes rayonnants et inversement au niveau du contact optique entre chacun des conducteurs optiques auxiliaires et le conducteur optique principal contre lequel il vient se positionner par une extrémité.

La courbure donnée à chaque conducteur optique principal 1 ou 1', dans la zone de raccordement où il est dénudé de sa gaine 2 ou 2', est choisie de manière qu'un transfert optimal d'énergie optique soit obtenu entre fibres raccordées au travers du revêtement de protection recouvrant la fibre de ce conducteur optique de câble.

De manière connue, la propagation lumineuse dans une fibre optique s'exprime en terme de modes ou par analogie avec l'optique géométrique en terme de rayons.

Un groupe de modes ou, autrement dit, une famille de rayons regroupe par exemple de l'ordre de 10000 modes en une centaine de groupes pour une fibre optique dont le diamètre de coeur est de 200 µm et dont l'ouverture numérique est de 0,21 et présente une inclinaison θ par rapport à l'axe de la fibre; les rayons sont guidés tant que l'angle θ est inférieur à un angle limite θₘ caractéristique des matériaux qui composent le conducteur optique dont fait partie cette fibre.

Dans une portion de fibre courbée supposée localisée dans un plan, l'inclinaison des modes augmente et ceux dont l'inclinaison dépasse l'angle limite θₘ se propagent à l'extérieur du coeur de fibre et au travers du revêtement, l'énergie rayonnée augmente en raison inverse du rayon de courbure et avec la longueur de fibre courbée.

L'énergie rayonnée est une fonction de la distribution d'énergie parmi les modes incidents au niveau d'une dérivation, or cette distribution évolue au cours de la propagation au long d'une fibre pour atteindre un quasi-équilibre après une longueur donnée de cette fibre.

Dans la mesure où les fibres à échelon d'indice présentent un fort couplage de modes de à leurs défauts intrinsèques, tels que fluctuations d'indice et de diamètre cet état d'équilibre est atteint rapidement, en particulier si on les compare aux fibres à gradient d'indice.

Seule une fraction des modes est concernée par l'échange d'énergie entre modes guidés et modes rayonnants et toute dérivation ainsi réalisée agit comme un filtre modal. Il est donc important de disposer d'une fibre à fort couplage intrinsèque pour bénéficier d'un retour rapide à l'équilibre modal de manière à assurer une uniformité de réponse dans le cas où plusieurs équipements sont raccordés par des coupleurs individuels au long d'un même conducteur optique communément partagé.

Pour obtenir une faible perte d'insertion, par exemple de l'ordre de 0,2 décibel permettant de desservir une vingtaine d'équipements au moyen d'un même conducteur optique, selon une forme préférée de réalisation , le rayon de courbure de fibre choisi est de l'ordre de quinze millimètres et le secteur angulaire correspondant à la longueur de fibre courbée est de l'ordre de quarante degrés.

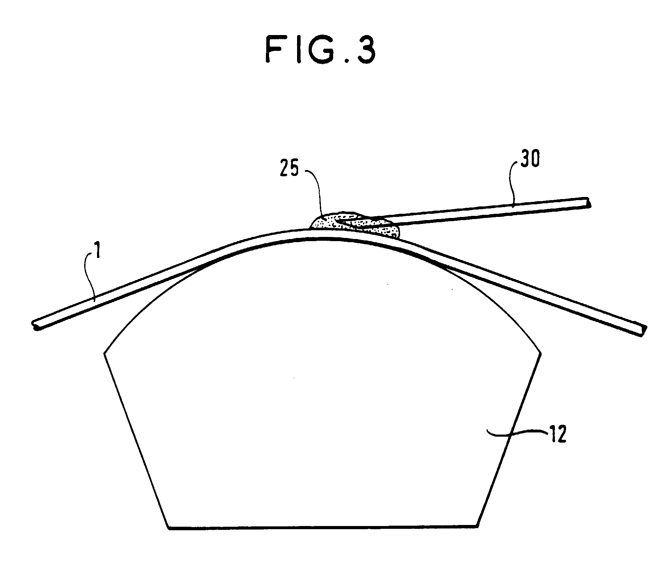

De plus la transmission d'énergie rayonnée hors notamment d'un conducteur optique de câble vers un conducteur optique auxiliaire est favorisée par une modification locale des conditions de propagation par l'apport d'une goutte 25 de matériau d'adaptation d'indice optique, tel que par exemple un gel, dans une zone de la partie courbée du conducteur optique de câble contre laquelle vient se positionner une extrémité biseautée du conducteur optique auxiliaire, - voir figure 3 -.

Ce matériau d'adaptation d'indice sert d'intermédiaire pour la transmission de l'énergie lumineuse fuyant d'une zone courbe de conducteur optique de câble vers l'extrémité "à vif" du coeur d'un conducteur optique auxiliaire convenablement appliquée contre le conducteur optique de câble dans la zone de courbure, ainsi que pour la transmission d'énergie lumineuse en sens inverse.

L'utilisation d'un gel au lieu d'une colle permet de supprimer un raccordement, devenu par exemple inutile, par simple retrait du conducteur optique auxiliaire correspondant et essuyage du gel, les conducteurs optiques de câble étant par exemple maintenus en place dans le boîtier.

Le matériau d'adaptation d'indice a préférablement un indice de réfraction intermédiaire entre celui du conducteur optique de câble et celui du conducteur optique auxiliaire, par exemple égal ou voisin du coeur de ce dernier, soit de l'ordre de 1,45 dans le cas d'un conducteur optique auxiliaire, composé d'une fibre, telle que celle dite PCS, dont le coeur de silice a un diamètre de 600 µm, dont le revêtement est en polymère et dont l'ouverture numérique est de 0,4.

Le biseau d'extrémité d'un conducteur optique auxiliaire est destiné à aligner au maximum l'axe d'un conducteur optique auxiliaire sur la tangente à l'arc médian du conducteur optique de câble, dans la zone où ce dernier est courbé, au point de rencontre de cet arc et de cet axe.

L'angle du biseau d'extrémité d'un conducteur optique auxiliaire par lequel ce conducteur prend appui sur un conducteur optique de câble est par exemple compris entre quinze et vingt degrés par rapport à l'axe du conducteur optique auxiliaire, notamment en raison des contraintes mécaniques qui limitent sa diminution.

Le positionnement d'une extrémité de conducteur optique auxiliaire sur un conducteur optique de câble implique une immobilisation de l'un par rapport à l'autre, dans la réalisation proposée, l'extrémité du conducteur optique auxiliaire est mécaniquement rapprochée du conducteur optique de câble préalablement immobilisé de manière prédéterminée.

Dans l'exemple de coupleur de piquage présenté, le rayon de courbure choisi pour chacun des deux conducteurs optiques 1 et 1' d'un coupleur de piquage est de l'ordre de quinze millimètres, ce rayon est imposé aux conducteurs par une surface d'appui bombée d'un gabarit de positionnement 12 en forme de poussoir galbé venant se placer contre eux dans la zone centrale située entre les bras tenseurs 7 et 8.

Ce gabarit 12 est par exemple prévu symétrique par rapport à un plan transversal médian de trace XX' sur la figure 1 et de trace YY' sur la figure 2, ce plan étant transversalement disposé par rapport aux trajets des conducteurs optiques 1, 1' dans le boîtier et constituant aussi un plan de symétrie pour les bras tenseurs 7, 8 et pour les jeux de mâchoires 3, 4 et 5, 6 dans le coupleur de piquage représenté.

Ce gabarit 12 est par exemple monté coulissant sans pratiquement de jeu dans un support non représenté, fixé dans le boîtier, qui assure son positionnement latéral avec précision, il est ici montré moitié en position rétractée sur la partie gauche de la figure 1 et moitié en position normale d'extension sur la partie droite, un ressort de compression 13 permettant l'appui de la surface d'appui bombée sur les conducteurs avec une pression maximale prédéterminée.

Une molette de réglage 14 permet le déplacement du gabarit; une butée 24, ici supposée réglable par vissage, permet de définir avec précision la position normale d'extension du gabarit 12 en fin de course dans le support où il coulisse.

La surface d'appui bombée du gabarit 12 sur laquelle viennent reposer les conducteurs optiques 1 et 1' est par exemple un secteur cylindrique d'environ quarante degrés d'arc dont le rayon a été défini ci-dessus et qui se développe identiquement de part et d'autre du plan transversal médian de traces XX', YY'.

Cette même angulation est ici reprise pour les axes longitudinaux des bras tenseurs 7 et 8 et pour les jeux de mâchoires 3, 4 et 5, 6 qui sont disposés de manière que les conducteurs optiques de câble se recourbent symétriquement de part et d'autre du plan transversal médian de traces XX', YY' en suivant le profil de la surface d'appui bombée du gabarit 12, par exemple avec l'aide de guides, tels que des plots de guidage ou encore des rainures de guidage parallèles, de ce gabarit qu'ils quittent en suivant un trajet rectiligne se développant dans un plan tangent à la surface d'appui bombée de ce gabarit de chaque côté du plan transversal médian défini ci-dessus.

L'orientation donnée aux conducteurs optiques de câble 1, 1' par chaque jeu de mâchoires est alors de l'ordre de soixante dix degrés par rapport au plan transversal médian défini plus haut de manière à éviter les pertes d'insertion qui seraient susceptibles de se produire en cas de courbures incontrôlées.

Les bras tenseurs 8, 9 qui sont préférablement réalisés en un matériau résilient et qui sont fixés par une de leurs extrémités par exemple au niveau d'un socle commun, ont leurs extrémités libres légèrement rapprochées du gabarit 12 par un dispositif auxiliaire leur permettant aussi de revenir élastiquement à leur position initiale, lorsqu'il les libère.

Dans l'exemple présenté, ce dispositif met en oeuvre deux tiges rotatives 18, 19 montées sur un élément constitutif fixe du coupleur et associées chacune à l'un des bras tenseurs 7, 8, le long duquel elle est plaquée transversalement. Chaque tige 18, 19 comporte une tête de commande, par exemple du type tête de vis, manoeuvrable lors des opérations de raccordement d'un coupleur de piquage et un méplat latéral.

L'appui d'un bras tenseur sur la tige 18 ou 19 associée, en dehors du méplat de cette tige maintient ce bras en position contrainte vers le gabarit 12, la rotation commandée de la tige libère classiquement le bras,lorsque celui-ci atteint le méplat, ainsi qu'on le voit sur la figure 1 où les bras tenseurs sont montrés chacun dans l'une des deux positions évoquées ci-dessus.

La mise en place de deux conducteurs optiques 1 et 1' dans le coupleur de piquage, après élimination locale de leurs gaines 2, 2' sur une longueur correspondant à la longueur de trajet prévue pour chaque conducteur optique de câble entre les deux jeux de mâchoires, elle implique l'insertion des deux conducteurs entre les mâchoires de chaque jeu et leur positionnement sur les extrémités libres des bras tenseurs 7, 8 à l'état précontraint et sur la surface d'appui bombée du gabarit 12, alors en position rétractée pour faciliter l'insertion.

Le collage des conducteurs optiques 1, 1' sur les extrémités libres des bras tenseurs 7, 8 s'effectue par exemple à l'aide d'une colle à séchage rapide après remise, ici manuelle, du gabarit 12 en position normale d'extension et avant libération de ces bras.

Cette libération des deux bras tenseurs 7, 8 entraîne la création de forces de tension sur chacun des conducteurs optiques 1 et 1' dans la zone de ces conducteurs situées entre les bras tenseurs en raison de l'élasticité de ces derniers.

L'intensité des forces appliquées qui est par exemple de l'ordre de deux newtons, est choisie pour assurer une courbure précise des conducteurs optiques, elle est obtenue de manière connue en elle-même en fonction des choix réalisés lors de la définition des bras tenseurs.

Le raccordement d'un conducteur optique auxiliaire 30 à un conducteur optique de câble dans le respect des conditions évoquées plus haut est obtenu avec l'assistance d'un agencement mécanique positionneur coopérant avec le gabarit 12 et d'un dispositif actionneur.

L'agencement positionneur comporte au moins une pièce 21, support de conducteurs optiques auxiliaires, qui, ici de forme allongée, est réalisée en matériau résilient de manière que l'une de ses deux extrémités, non fixée, soit libre de se déplacer légèrement vers le gabarit 12.

Le dispositif actionneur comporte ici au moins une came 22 disposée latéralement par rapport à la pièce support 21 et montée rotative dans le coupleur au niveau d'une partie fixe par rapport au support non représenté où coulisse le gabarit 12.

L'autre extrémité de la pièce support 21 est immobilisée sur une partie fixe qui est éventuellement celle où est montée la came 22, sa fixation est prévue pour permettre de manière connue en elle-même un positionnement précis de la pièce support qui la comporte par rapport au gabarit 12 en position d'extension normale. Ce positionnement est préférablement réalisé lors de l'assemblage du coupleur de piquage en usine et n'est normalement pas destiné à être retouché sur site, lors du montage de ce coupleur sur les conducteurs optiques de câble qu'il doit équiper.

L'extrémité libre de la pièce support 21 est ici reliée à l'extrémité fixe de cette pièce support par un bras flexible conçu de façon connue en elle-même pour ne fléchir que de manière prédéterminée sous l'action de la came rotative 22, pour que l'extrémité libre ne puisse parcourir qu'une trajectoire précise, prévue à l'avance, notamment en direction du gabarit.

Le ou ici les deux conducteurs optiques auxiliaires à raccorder aux conducteurs optiques 1, 1' sur le gabarit 12 sont immobilisés à l'extrémité libre de la pièce de support 21 aux environs de leur extrémité taillée en biseau pour le raccordement.

Le positionnement de ces conducteurs optiques auxiliaires qui est aussi préférablement réalisé lors du montage du coupleur de piquage en usine s'effectue avec précision dans des dispositifs de positionnement et fixation, par exemple de type rainure ou conduit, prévus à cet effet dans la pièce de support 21 au niveau de son extrémité libre où ces conducteurs optiques auxiliaires sont par exemple collés après un positionnement précis éventuellement assisté par mesure des performances obtenues en cours de réalisation.

Comme indiqué plus haut chaque conducteur optique auxiliaire est alors disposé de manière à venir en contact avec un conducteur optique de câble sur le gabarit 12 en position d'extension normale selon un trajet rectiligne à partir de la zone de raccordement où le coeur à vif de ce conducteur auxiliaire entre latéralement en contact, par son biseau et via une goutte 25 de matériau d'adaptation d'indice, avec le conducteur optique de câble.

Dans la réal réalisation proposée, le raccordement s'étend sur une portion d'environ dix degrés d'angle localisée sur la portion de conducteur optique de câble, courbée sur le gabarit 12, que vient pratiquement couvrir le biseau du conducteur auxiliaire et dans un secteur de cette portion courbée d'environ degrés à partir du plan transversal médian du gabarit, les autres conditions de raccordement définies plus haut étant elles aussi respectées.

Dans une forme préférée de réalisation chaque coupleur de piquage est amené sur site garni de ces conducteurs optiques auxiliaires préalablement positionnés de manière optimale en usine, par exemple lors de l'assemblage de ce coupleur.

Le montage du coupleur sur des conducteurs optiques de câble à équiper s'effectue de la manière évoquée plus haut en ce qui concerne le positionnement de ces conducteurs sur le gabarit, les bras tenseurs et dans les jeux de mâchoires.

Le raccordement sur site des conducteurs optiques auxiliaires aux conducteurs optiques de câble par appui de l'extrémité, préalablement garnie d'une goutte de matériau d'adaptation d'indice, des uns contre le flanc courbé de l'un des autres s'effectue alors par simple rapprochement de l'extrémité le la pièce support 21 vers le gabarit 12 au moyen de la came 22.

Dans l'exemple de réalisation envisagé, la pièce 21 est conçu pour assurer un appui simultané de deux conducteurs optiques auxiliaires chacun sur un conducteur optique différent de câble d'un même côté du gabarit 12 par rapport au plan transversal médian de trace XX', YY' défini plus haut pour ce gabarit.

Un montage permettant de connecter deux conducteurs optiques auxiliaires en sens inverse chacune sur un conducteur optique différent de câble de part et d'autre du plan transversal médian du gabarit 12 est aisément obtenu par simple adjonction d'une seconde pièce de support 21 et d'une seconde came 22 symétriquement par rapport à ce plan transversal médian dans le boîtier du coupleur de piquage selon l'invention.

Les conducteurs optiques auxiliaires orientés dans des directions opposées permettent alors des transmissions d'énergie lumineuse en sens inverses par l'intermédiaire de conducteurs optiques parallèles de câble.

## Revendications

1. Coupleur de piquage optique destiné à être monté en un emplacement quelconque, dit de piquage, d'un câble comportant au moins un conducteur optique (1), constitué par une fibre optique en verre à échelon d'indice, protégée par un revêtement plastique et logée dans une gaine isolante (2), pour injection ou dérivation d'énergie optique au niveau de cet emplacement de piquage dans ou depuis ce conducteur optique, ledit coupleur comportant des premiers moyens (3 à 8, 12) pour donner une position et une courbure déterminée à une portion dudit conducteur optique en vue d'y connecter un conducteur optique auxiliaire (30), des seconds moyens (21, 22) pour positionner une extrémité dudit conducteur optique auxiliaire contre la portion courbée dudit conducteur de câble avec un faible angle d'incidence pour ledit conducteur optique auxiliaire par rapport au conducteur optique de câble, des troisièmes moyens d'adaptation d'indice optique (25) entre l'extrémité du conducteur optique auxiliaire et ladite portion courbée du conducteur optique de câble, pour assurer localement une transmission d'énergie optique en mode rayonné entre les deux conducteurs optiques, où l'énergie est alors transmise en mode guidé, les premiers moyens comportant:
- un gabarit de positionnement (12) pour ledit conducteur optique de câble en position déterminée sur une surface d'appui bombée selon un arc de cercle de rayon déterminé, caractérisé en ce que les premiers moyens comportent en outre des moyens d'immobilisation (3 à 8) pour ledit conducteur optique de câble, qui sont disposés de part et d'autre du gabarit et qui immobilisent par traction ledit conducteur optique de câble mis en position dans un guide du gabarit, et que ces moyens d'immobilisation associent un dispositif (7, 8) tenseur de conducteur optique de câble qui est dégainé dans la zone entre lesdits moyens d'immobilisation pour permettre de tendre le conducteur optique de câble sur le gabarit, ce dispositif tenseur (7, 8) étant doté de deux bras tenseurs (7, 8) dont une extrémité libre est munie d'un dispositif de fixation (9, 10) pour ledit conducteur optique de câble, chaque extrémité libre, positionnée au long du trajet prévu pour ledit conducteur entre le gabarit (12) et un dispositif d'immobilisation pour le conducteur de câble gainé, étant élastiquement rappelée vers le dispositif d'immobilisation pour soumettre le conducteur optique de câble reposant sur le gabarit entre les deux bras tenseurs à des tractions déterminées de sens inverse, assurant sa tension sur le gabarit.

2. Coupleur selon la revendication 1, caractérisé en ce que le gabarit (12) est mobile en translation entre une position rétractée permettant une mise en place du conducteur optique de câble sur la surface bombée du gabarit et une position d'extension déterminée, et que la surface d'appui bombée du gabarit est extérieurement dotée d'un guide pour ledit conducteur optique de câble.

3. Coupleur selon la revendication 2, caractérisé en ce que le gabarit est associé à une butée (24) et un ressort de rappel (13) définissant la position d'extension du gabarit.

4. Coupleur selon la revendication 1, caractérisé en ce que les seconds moyens comportent un agencement (21) positionneur du conducteur optique auxiliaire pour permettre l'application d'une extrémité du conducteur auxiliaire en une position déterminée contre le conducteur optique du câble.

## Patentansprüche

1. Optischer Abzweigkoppler, vorgesehen zur Montage an einer beliebigen als Abzweigstelle bezeichneten Stelle eines Kabels, das wenigstens einen optischen Leiter (1) aufweist, der aus einer optischen Glasfaser mit Stufenindex, geschützt durch einen Plastiküberzug und untergebracht in einer isolierenden Hülle (2), besteht, zum Einspeisen oder Abzweigen von optischer Energie in Höhe dieser Abzweigstelle in den oder von dem optischen Leiter, wobei der Koppler umfaßt:
erste Mittel (3-8, 12), um einem Abschnitt des optischen Leiters eine festgelegte Position und Krümmung zu geben, um dort einen optischen Hilfsleiter (30) anzuschließen, zweite Mittel (21, 22), um ein Ende des optischen Hilfsleiters am gekrümmten Abschnitt des optischen Kabelleiters mit einem kleinen Einfallswinkel für den optischen Hilfsleiter in Bezug auf den optischen Kabelleiter zu positionieren,
dritte Mittel zur Brechungsindexanpassung (25) zwischen dem Ende des optischen Hilfsleiters und dem gekrümmten Abschnitt des optischen Kabelleiters, um lokal eine Übertragung von optischer Energie in abgestrahlter Mode zwischen den zwei optischen Leitern sicherzustellen, wo dann die Energie in geleiteter Mode übertragen wird,
wobei die ersten Mittel umfassen:
- eine Lehre (12) zum Positionieren des optischen Kabelleiters in vorgegebener Position auf einer gemäß einem Kreisbogen mit bestimmtem Radius gewölbten Andrückoberfläche,
dadurch gekennzeichnet, daß die ersten Mittel ferner Mittel zum Festlegen (3-8) für den optischen Kabelleiter umfassen, die beiderseits der Lehre angeordnet sind und durch Zug den in einer Führung der Lehre positionierten optischen Kabelleiter festlegen und daß die Mittel zum Festlegen eine Spannvorrichtung (7, 8) des optischen Kabelleiters umfassen, der in der Zone zwischen den Mitteln zum Festlegen von seiner Hülle befreit ist, um zu gestatten, den optischen Kabelleiter auf der Lehre zu spannen, wobei die Spannvorrichtung (7, 8) mit zwei Spannarmen (7, 8) versehen ist, von denen ein freies Ende mit einer Befestigungsvorrichtung (9, 10) für den optischen Kabelleiter versehen ist, wobei jedes freie Ende, positioniert entlang der für den Leiter zwischen der Lehre (12) und einer Vorrichtung zum Festlegen für den umhüllten Kabelleiter vorgesehenen Bahn, elastisch in Richtung der Vorrichtung zum Festlegen beaufschlagt ist, um den auf der Lehre zwischen den zwei Spannarmen ruhenden optischen Kabelleiter festgelegten, entgegengesetzt gerichteten Zugkräften auszusetzen, die seine Spannung auf der Lehre sicherstellen.

2. Koppler nach Anspruch 1, dadurch gekennzeichnet, daß die Lehre (12) zwischen einer zurückgezogenen Position, die eine Plazierung des optischen Kabelleiters auf der gewölbten Oberfläche der Lehre gestattet, und einer bestimmten Ausstreckposition in Translation bewegbar ist, und das die gewölbte Andrückoberfläche der Lehre äußerlich mit einer Führung für den optischen Kabelleiter versehen ist.

3. Koppler nach Anspruch 2, dadurch gekennzeichnet, daß die Lehre einem Anschlag (24) und einer Rückstellfeder (13) zugeordnet ist, die die Ausstreckposition der Lehre festlegen.

4. Koppler nach Anspruch 1, dadurch gekennzeichnet, daß die zweiten Mittel eine Positionieranordnung (21) für den optischen Hilfsleiter umfassen, um das Anbringen eines Endes des Hilfsleiters in einer bestimmten Position am optischen Kabelleiter zu gestatten.

## Claims

1. An optical tapping coupler designed to be mounted at an arbitrary "tapping" location along a cable including at least one optical conductor (1) constituted by a glass step-index optical fiber protected by a plastic covering and housed inside an insulating sheath (2), said coupler being used either for injecting optical energy into one such optical conductor or for extracting optical energy therefrom at the tapping location, said coupler including first means (3 to 8, 12) for giving a determined position and a determined curvature to a portion of said optical conductor with a view to connecting an auxiliary optical conductor (30) thereat, second means (21, 22) for positioning one end of said auxiliary optical conductor against the curved portion of said cable conductor, with a small angle of incidence for said auxiliary optical conductor relative to the cable optical conductor, and optical-index-matching third means (25) between the end of the auxiliary optical conductor and said curved portion of the cable optical conductor, which third means are used for locally transmitting optical energy in radiated mode between the two optical conductors, with energy thus being transmitted within said conductors in guided mode, the first means including:
- a positioning jig (12) for said cable optical conductor in determined position on a convex abutment surface along an arc of a circle of determined radius,
said coupler being characterized in that the first means further include locking means (3 to 8) for holding said cable optical conductor stationary, which locking means are disposed on respective sides of the jig and they hold said cable optical conductor stationary by traction once it is in position in a jig guide, and in that said locking means associate a cable optical conductor tensioner device (7, 8) which is unsheathed in the zone between said locking means to allow the cable optical conductor to be tensioned on the jig, said tensioner device (7, 8) being equipped with two tensioner arms (7, 8) each having a free end equipped with a fixing device (9, 10) for fixing said cable optical conductor thereto, each free end being positioned along the path provided for said cable conductor between the jig (12) and the locking device for the sheathed cable conductor and being resiliently urged towards the locking device so as to subject the cable optical conductor resting on the jig between the two tensioner arms to determined traction in opposite directions, thereby ensuring that the cable conductors are held taut on the jig.

2. A coupler according to claim 1, characterized in that the jig (12) is movable in translation between a retracted position enabling the cable optical conductor to be put into position on the convex surface of the jig and a determined extended position, and in that the convex abutment surface of the jig is externally equipped with a guide for said cable optical conductor.

3. A coupler according to claim 2, characterized in that the jig is associated with an abutment (24) and a return spring (13) defining the extended position of the jig.

4. A coupler according to claim 1, characterized in that the second means include an auxiliary-optical-conductor-positioning arrangement (21) to enable one end of the auxiliary conductor to be applied in a determined position against the cable optical conductor.
